Europäisches Patentamt

European Patent Office

Office européen des brevets

(11) Veröffentlichungsnummer : **0 527 746 B1**

(12) **EUROPÄISCHE PATENTSCHRIFT**

(45) Veröffentlichungstag der Patentschrift :
**25.05.94 Patentblatt 94/21**

(51) Int. Cl.$^5$ : **G01C 19/72**

(21) Anmeldenummer : **91905461.9**

(22) Anmeldetag : **14.03.91**

(86) Internationale Anmeldenummer :
**PCT/DE91/00225**

(87) Internationale Veröffentlichungsnummer :
**WO 91/17411 14.11.91 Gazette 91/26**

(54) **ANORDNUNG ZUM ERMITTELN VON SPEKTRALLINIENAMPLITUDEN DES AUSGANGSSIGNALS EINES RINGINTERFEROMETERS.**

(30) Priorität : **07.05.90 DE 4014516**

(43) Veröffentlichungstag der Anmeldung :
**24.02.93 Patentblatt 93/08**

(45) Bekanntmachung des Hinweises auf die
Patenterteilung :
**25.05.94 Patentblatt 94/21**

(84) Benannte Vertragsstaaten :
**CH DE FR GB IT LI SE**

(56) Entgegenhaltungen :
**US-A- 4 796 993
Conference Proceedings OFS' 84, 2nd International Conference on Optical Fiber Sensors,
5.-7. September 1984, Liederhalle, Stuttgart,
DE ; K. Böhm et al. : "Fiber optic gyro with
digital data processing", Seiten 251-258**

(73) Patentinhaber : **ANT Nachrichtentechnik
GmbH
Gerberstrasse 33
D-71522 Backnang (DE)**

(72) Erfinder : **GÖCKLER, Heinz
Elbinger Str. 52
D-7150 Backnang (DE)**

EP 0 527 746 B1

**Beschreibung**

Anordnung zum Ermitteln von Spektrallinienamplituden des Ausgangssignals eines Ringinterferometers

Die vorliegende Erfindung betrifft eine Anordnung zum Ermitteln der Amplituden von im phasenmodulierten Ausgangssignal eines optischen Ringinterferometers enthaltenen Spektrallinien, welche geeignet sind, um die Winkelgeschwindigkeit, mit der das Ringinterferometer gedreht wird, zu bestimmen, wozu eine digital Auswerteschaltung verwendet wird.

Ein derartiges Verfahren geht aus der DE 31 40 110 A1 hervor. In der einen ringförmigen Lichtweg bildenden Lichtleitfaser des Ringinterferometers breiten sich zwei gegenläufige Lichtwellen aus, die beim Austritt aus der Lichtleitfaser miteinander interferieren. Die Interferenz hängt von der Winkelgeschwindigkeit ab, mit der die mindestens eine Windung bildende Lichtleitfaser gedreht wird. Der Winkelgeschwindigkeit ist die Phasendifferenz zwischen den beiden Lichtwellen, welche die Lichtleitfaser in entgegengesetzten Richtungen durchlaufen haben, proportional. Diese Phasendifferenz, sie wird als Sagnac-Phase bezeichnet, läßt sich, wie der DE 31 40 110 A1 zu entnehmen ist, aus den Amplituden der Spektrallinien des aus der Lichtleitfaser austretenden Interferenzlichts bestimmen.

Um ein für die Ermittlung der Sagnac-Phase geeignetes Ausgangssignal des Faserringinterferometers zu erhalten, werden die an einem Ende aus der Lichtleitfaser austretenden Lichtwellen phasenmoduliert. Die Auswertung des analogen Ausgangssignals, um die Sagnac-Phase zu bestimmen, erfolgt vorteilhafterweise durch eine digitale Signalverarbeitung. Da das analoge Ausgangssignal aufgrund der erforderlichen hohen Phasenmodulationsfrequenz für die nachfolgende digitale Signalverarbeitung eine ungünstig hohe Frequenzlage hat, wird gemäß der DE 31 40 110 A2 entweder die Leistung des in das Faserringinterferometer eingespeisten Lichts mit einer geeigneten Frequenz gepulst oder das Ausgangssignal mit einem Mischer in eine niedrigere Frequenzlage herabgesetzt. Beide Lösungen sind mit zusätzlichem Schaltungsaufwand verbunden. Ein weiterer Nachteil des Mischvorganges ist der, daß unerwünschte Mischprodukte entstehen, die durch zusätzliche analoge Filterung unterdrückt werden müssen, damit das Abtasttheorem erfüllt wird und somit keine unzulässigen spektralen Faltungsprodukte erzeugt werden, die das auszuwertende Signal stark verfälschen würden.

Bei einem aus der US 4,796,993 bekannten Ringinterferometer wird das phasenmodulierte Ausgangssignal zwei synchronen Detektoren zugeführt, von denen der eine aus allen geradzahligen Harmonischen des Ausgangssignals einen ersten Gleichanteil und der zweite synchrone Detektor aus allen ungeradzahligen Harmonischen einen zweiten Gleichanteil bildet. Aus beiden Gleichanteilen wird anschließend die Sagnac-Phase errechnet.

Der Erfindung liegt die Aufgabe zugrunde, eine Anordnung der eingangs genannten Art anzugeben, die mit geringem schaltungstechnischen Aufwand die Amplituden gewünschter Spektrallinien aus dem Ausgangssignal eines Ringinterferometers möglichst exakt ermittelt.

Diese Aufgabe wird erfindungsgemäß durch die Merkmale des Anspruchs 1 gelöst. Vorteilhafte Ausführungen der Erfindung gehen aus den Unteransprüchen hervor.

Durch den Einsatz einer Frequenzweiche gemäß der Erfindung sind an die nachfolgenden digitalen Filter keine sehr hohen Anforderungen bezüglich ihrer Selektion zu stellen.

Anhand mehrerer in der Zeichnung dargelegter Ausführungsbeispiele wird nachfolgend die Erfindung näher erläutert. Es zeigen:

Fig. 1      ein Blockschaltbild einer Schaltung zum Ermitteln der Amplituden gewisser Spektrallinien aus dem Ausgangssignal eines Ringinterferometers,

Fig. 2      eine Frequenzweiche aus dieser Schaltung,

Fig. 3      mehrere Frequenzspektren,

Fig. 4      eine erste Ausführung,

Fig. 5      eine zweite Ausführung und

Fig. 6      eine dritte Ausführung eines komplexen digitalen Filters.

Das Ausgangssignal eines Ringinterferometers hat bekanntlich (s. DE 31 40 110 A1) folgende Form:

$$i(t) = I_O[1 + J_O(2\psi) \cos 2\phi]$$
$$-2I_O J_1(2\psi) \sin 2\phi \cos (2\pi f_m t - \alpha)$$
$$-2I_O J_2(2\psi) \cos 2\phi \cos 2(2\pi f_m t - \alpha) \quad (1)$$
$$+2I_O J_3(2\psi) \sin 2\phi \cos 3(2\pi f_m t - \alpha)$$
$$+2I_O J_4(2\psi) \cos 2\phi \cos 4(2\pi f_m t - \alpha)$$

.

.

.

Hierin sind die Faktoren $J_n(2\psi)$ mit n = 0, 1, 2, ... die Werte des Besselfunktionen 1. Art der n-ten Ordnung für das Argument $2\psi = 2\psi_o \sin \pi f_m \tau$. $I_o$ gibt die Intensität des in das Ringinterferometer eingespeisten Lichts, $\psi_o$, den Modulationsindex der mit der Frequenz $f_m$ durchgeführten Phasenmodulation und $\tau$ die Laufzeit der Lichtwellen durch das Ringinterferometer an. Mit $\phi$ ist die sogenannte Sagnac-Phase bezeichnet, welche proportional zu der Winkelgeschwindigkeit ist, mit der das Ringinterferometer gedreht wird. Diese Sagnac-Phase $\phi$ soll letztendlich ermittelt werden. Sie läßt sich aus den Amplituden von drei oder vier Spektrallinien des Ausgangssignals i(t) berechnen. Die von der Sagnac-Phase abhängigen Amplituden A1 bis A4 von z.B. vier Spektrallinien sind nachfolgend aufgeführt:

$$A1 = 2I_O J_1(2\psi)|\sin 2\phi|$$
$$A2 = 2I_O J_2(2\psi) \cos 2\phi$$
$$A3 = 2I_O J_3(2\psi)|\sin 2\phi|$$
$$A4 = 2I_O J_4(2\psi) \cos 2\phi \quad (2)$$

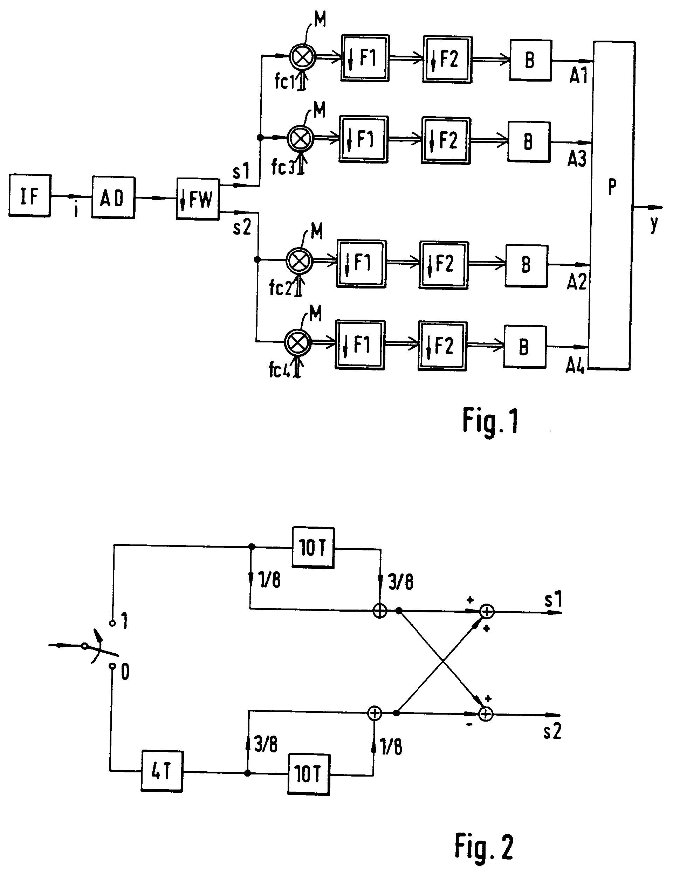

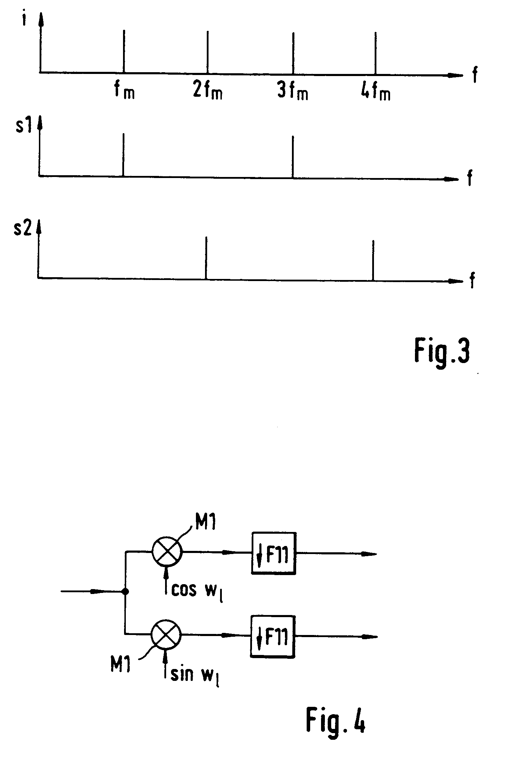

In Fig. 1 ist eine Schaltung dargestellt, mit der die vier Spektrallinienamplituden A1 bis A4 ermittelt werden können. Das analoge Ausgangssignal i(t) eines Ringinterferometers IF wird zunächst in einem Analog-Digital-Umsetzer AD digitalisiert und dann einer Frequenzweiche FW zugeführt, welche das digitalisierte Ausgangssignal in zwei Signalanteile s1 und s2 zerlegt. Der erste Signalanteil sl enthält alle Spektrallinien des Ausgangssignals i(t) [s. Gleichung (1)] mit dem ungeradzahligen Vielfachen der Phasenmodulationsfrequenz $f_m$ (oder einer davon abgeleiteten Frequenz), also alle Spektrallinien, deren Amplituden von $\sin 2\phi$ abhängen. Der zweite Signalanteil s2 enthält alle Spektrallinien mit dem geradzahligen Vielfachen der Phasenmodulationsfrequenz $f_m$ (oder einer davon abgeleiteten Frequenz), also alle Spektrallinien, deren Amplituden von $\cos 2\phi$ abhängen. Die Fig. 3 verdeutlicht die Zerlegung des Ausgangssignals i(t) mit den Spektrallinien $nf_m$ (n= 1, 2, 3, ...) in den ersten Signalanteil s1, der nur die Spektrallinien mit den ungeradzahligen Vielfachen der Phasenmodulationsfrequenz $f_m$ enthält und in den zweiten Signalanteil s2, der nur die geradzahligen Vielfachen der Phasenmodulationsfrequenz $f_m$ aufweist. Durch diese Aufteilung des Ausgangssignals i(t) in die zwei Signalanteile s1 und s2 erfolgt eine Vorselektion der Spektrallinien mit der vorteilhaften Konsequenz, daß die Abstände zwischen den in jedem Signalanteil auftretenden Spektrallinien doppelt so groß sind wie die Abstände zwischen den Spektrallinien des ursprünglichen Ausgangssignals. Die Selektion der Spektrallinien der einzelnen Signalanteile s1 uns s2 läßt sich daher mit weniger aufwendigen, d.h. weniger selektiven Filtern bewerkstelligen.

Jeder Signalanteil s1, s2 wird zwei parallelen Filterzweigen zugeführt, welche aus dem ersten Signalanteil s1 die vom $\sin 2\phi$ abhängigen Spektrallinienamplituden A1 und A3 und aus dem zweiten Signalanteil s2 die von $\cos 2\phi$ abhängigen Spektrallinienamplituden A2 und A4 ermitteln. In jedem Filterzweig befindet sich eine Mischeranordnung M, welche jeweils eine Spektrallinie aus dem ihm zugeführten Signalanteil s1 oder s2 nominell auf die Frequenz Null herabsetzt und dabei das zunächst reelle Signal in ein komplexes Signal überführt. Dazu wird jede Mischeranordnung M mit einem komplexen abgetasteten Trägersignal der Form

$$e_{-j2\pi f_{cl} k/f_A}, \quad (3)$$

beaufschlagt, wobei $f_{cl} = lf_m$ (mit 1 = 1, 2, 3, 4), $f_A$ die Abtastfrequenz des jeweiligen Signalanteils s1 oder s2 und k = 1, 2, 3 ... (Zeitindex) ist. Auf die Mischeranordnung M folgt ein komplexes digitales Tiefpaßfilter F1, dem eventuell auch noch ein weiteres komplexes digitales Tiefpaßfilter F2 in Reihe geschaltet ist. Nachdem bereits die Frequenzweiche FW die Abtastfrequenz des digitalisierten Ausgangssignals herabgesetzt hat, wird die Abtastfrequenz in jedem Filter F1, F2 weiter reduziert, so daß sie für die digitale Verarbeitung der Spektrallinienamplituden A1 bis A4 einen günstigen niedrigen Wert hat. Dadurch, daß jede in einem Filterzweig zu selektierende Spektrallinie nominell auf die Frequenz Null umgesetzt wird, können in allen Filterzweigen identische komplexe digitale Tiefpaßfilter F1 bzw. F2 verwendet werden.

Am Ausgang eines jeden komplexen digitalen Tiefpaßfilters F1, F2 steht die jeweils herausgefilterte Spektrallinie, zerlegt in einen realen und einen imaginären Anteil, zur Verfügung. Ihre Amplitude A1, A2, A3, A4 läßt sich in bekannter Weise durch Quadrieren des Real- und des Imaginäranteils, deren Addition und anschließende Wurzelbildung, bestimmen. Diese Operation wird von einem Schaltblock B ausgeführt. In der Fig. 1 sind diejenigen Schaltblöcke M, F1, F2, welche komplexe Signale verarbeiten, doppellinig gezeichnet.

Aus den ermittelten Spektrallinienamplituden Al bis A4 wird in einem Prozessor P die Sagnac-Phase $\phi$ berechnet. Wie aus vier Spektrallinienamplituden die Sagnac-Phase $\phi$ herleitbar ist, geht aus der älteren deutschen Patentanmeldung P 39 35 357 hervor. Die ältere deutsche Patentanmeldung P 39 41 991 schlägt ein Verfahren vor, nach dem sich die Sagnac-Phase $\phi$ aus drei Spektrallinienamplituden bestimmen läßt. Letzerem entsprechend benötigt man auch nur drei Filterzweige.

Gemäß Fig. 2 ist die Frequenzweiche FW als Kammfilter ausgebildet, bei dem sich die Durchlaß- und Sperrbereiche periodisch äquidistant im Frequenzbereich von 0 bis $f_A$ (Abtastfrequenz des Analog-Digital-Umsetzers AD) wiederholend abwechseln.

Es soll gelten $f_A = p \cdot f_m$, wobei p/2 eine ganze und ungerade Zahl ist. Für den Fall, daß p = 10, also die Abtastfrequenz $f_A$ des digitalisierten Ausgangssignals des Ringinterferometers dem 10-fachen der Phasenmodulationsfrequenz $f_m$ entspricht, sind in dem Kammfilter die Verzögerungsraten (10T, 4T mit T = 1/$f_A$) und Koeffizienten (1/8, 3/8) so zu wählen, wie in der Fig. 2 angegeben. Durch die eingangsseitige Umschaltung zwischen den Schaltwegen 0 und 1 mit der Abtastfrequenz $f_A$ reduziert sich die Abtastfrequenz $f_A$' der beiden Signalanteile s1 und s2 am Ausgang des Kammfilters auf $f_A$' = 1/2 $f_A$. Bei dieser als Kammfilter ausgebildeten Frequenzweiche erfahren beide Signalanteile s1 und s2 immer die gleiche Bewertung; d.h. auch Fehler wirken sich auf beide Signalanteile identisch aus. Dadurch entstehen bei der Bestimmung der Sagnac-Phase $\phi$ keinerlei Verfälschungen, da die Sagnac-Phase durch Quotientenbildung der Amplituden von den Signalanteilen s1 und s2 berechnet werden.

Die gemäß Fig. 1 in jeden Filterzweig vorhandene komplexe Mischeranordnung M und das ihm nachgeschaltete komplexe Tiefpaßfilter F1 können, wie Fig. 4 zeigt, mit zwei reellen Mischern M1 und zwei diesen nachgeschalteten identischen digitalen (z.B. transversalen) Tiefpaßfiltern F11 mit reellen Komponenten realisiert werden. Die Tiefpaßfilter F1 reduzieren die Abtastfrequenz $f_A$' des Ausgangssignals der Frequenzweiche FW am besten um den Faktor p/2, also um den Faktor 5. In einem der beiden Mischer M1 wird der jeweilige von der Frequenzweiche FW gelieferte Signalanteil s1 bzw. s2 mit dem Träger cos $\omega_l$ auf die Frequenz F = 0 herabgemischt. Das dabei entstehende Mischprodukt stellt den Realteil des Signalanteils dar. Der zugehörige Imaginärteil entsteht durch dem Mischvorgang des Signalteils s1 bzw. s2 mit dem Träger sin $\omega_l$ in dem anderen Mischer M1. Die beiden Trägersignale cos $\omega_l$ und sin$\omega_l$ haben das Argument $\omega_l = 2\pi f_o k/f_A$'. Diese Art der komplexen Filterung beschreibt M. Bellanger in seinem Buch "Digital Processing of Signals", 2. Edition, John Wiley & Sons Verlag, S. 356 und 357.

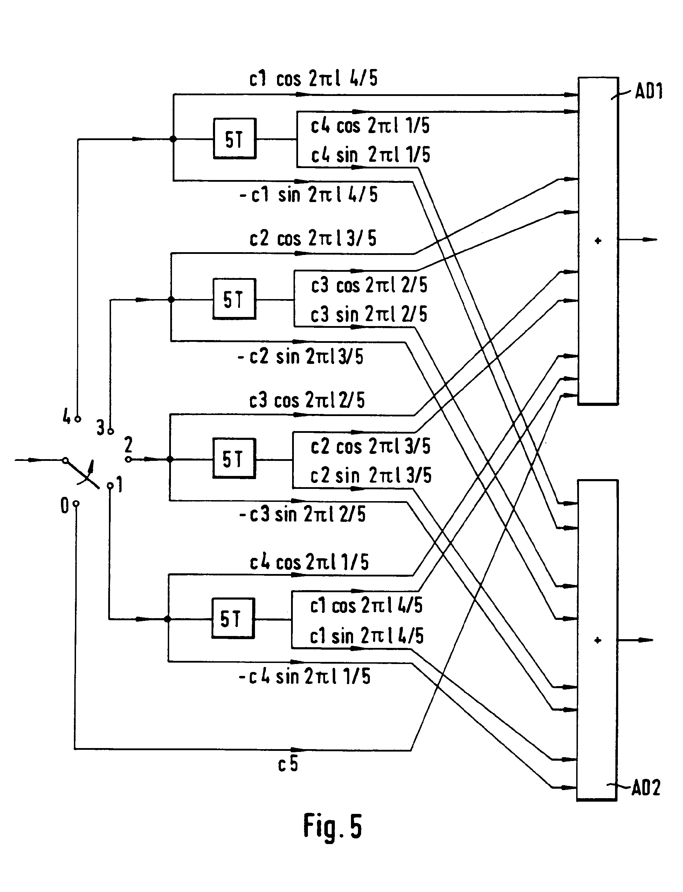

Die gemäß Fig. 1 in jedem Filterzweig vorhandene Kombination aus einer komplexen Mischeranordnung M und einem komplexen Filter F1 läßt sich auch durch ein transversales digitales Filter mit komplexen Koeffizienten realisieren. Der Fig. 5 ist ein solches Filter zu entnehmen, das aus z. B. fünf ( = p/2) Signalpfaden 0 ... 4 besteht, auf die zyklisch die Abtastwerte des von der Frequenzweiche gelieferten Signalanteils s1 bzw. s2 durchgeschaltet werden. Dieser Schaltvorgang reduziert die Abtastfrequenz $f_A$' des jeweiligen Signalanteils s1 bzw. s2 genau wie die ursprüngliche Anordnung um den Faktor p/2 = 5. Die für das Filter erforderlichen realen und imaginären Koeffizienten sind in der Fig. 5 eingetragen. Ein erster Addierer AD1 am Ausgang der Filterschaltung summiert alle realen Signalkomponenten aus den fünf Signalpfaden, und die imaginären Signalkomponenten werden von einem zweiten Addierer AD2 zusammengefaßt.

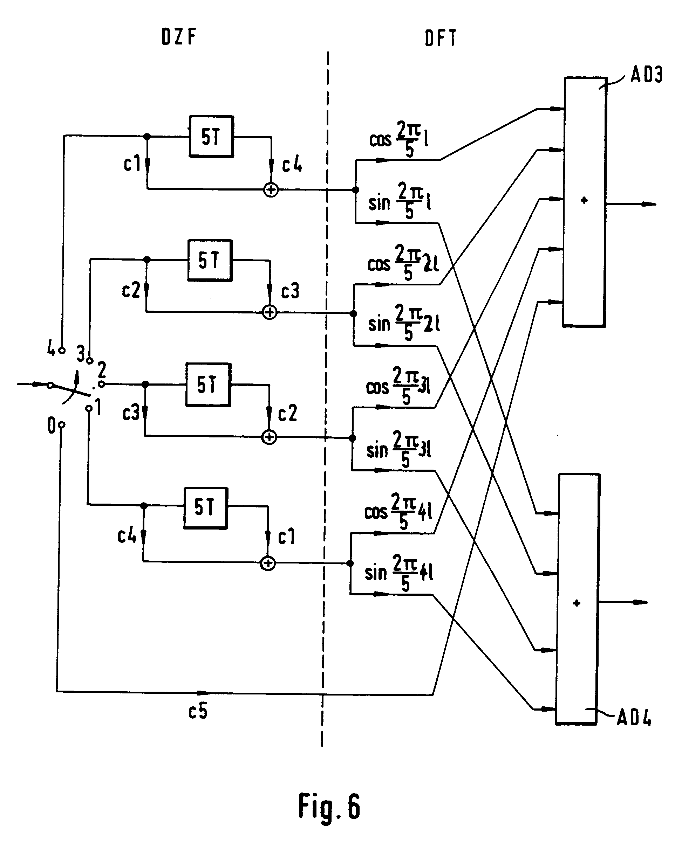

Eine weitere Variante einer Filteranordnung, die aus dem reellen, von der Frequenzweiche FW abgegebenen Signalanteil s1 bzw. s2 eine bestimmte Spektrallinie herausfiltert und diese in ein komplexes Signal mit einer um den Faktor p/2 ( = 5) verminderten Abtastfrequenz umsetzt, geht aus der Fig. 6 hervor. Diese Filteranordnung besteht aus einem als Polyphasennetzwerk ausgebildeten Dezimationsfilter DZF (auf der linken Seite von der gestrichelten Linie) mit reellen Koeffizienten C1 ... C5, bei dem wie beim Filter in Fig. 5 durch einen Schaltvorgang die Abtastfrequenz um den Faktor p/2 = 5 reduziert wird. An das Dezimationsfilter DZF schließt sich ein Netzwerk DFT an, das durch eine diskrete Fouriertransformation die vom Dezimationsfilter DZF separierte Spektrallinie in ein reales und in ein imaginäres Signal zerlegt.

Die für das Netzwerk DFT erforderlichen Koeffizienten sind in der Fig. 6 eingetragen. Ein erster Addierer AD3 am Ausgang des Netzwerks DFT faßt die realen Signalkomponenten, und ein zweiter Addierer die imaginären Signalkomponenten zusammen.

Ein weiterer Aufwandsvorteil der Anordnung gemäß Fig. 6 ist der, daß für jeden Signalteil s1 bzw. s2 jeweils nur ein Dezimationsfilter DZF erforderlich ist (also insgesamt 2DZF) und für die einzelnen Amplituden lediglich ein eigenes Netzwerk DFT bereitgestellt werden muß.

**Patentansprüche**

1. Anordnung zum Ermitteln der Amplitude von im phasenmodulierten Ausgangssignal eines optischen Ringinterferometers enthaltenen Spektrallinien, welche geeignet sind, um die Winkelgeschwindigkeit, mit der das Ringinterferometer gedreht wird, zu bestimmen, wozu eine digitale Auswerteschaltung verwendet wird, dadurch gekennzeichnet, daß eine Frequenzweiche (FW) das digitalisierte Ausgangssignal (i) des Ringinterferometers (IF) in einen ersten Signalanteil (s1) und einen zweiten Signalanteil (s2) aufteilt, daß der erste Signalanteil (s1) die Spektrallinien mit den ungeradzahligen Vielfachen der Phasenmodulationsfrequenz oder einer davon abgeleiteten Frequenz und der zweite Signalanteil (s2) die Spektrallinien mit dem geradzahligen Vielfachen der Phasenmodulationsfrequenz oder einer davon abgeleiteten Frequenz enthält, wobei die in den Signalanteilen (s1, s2) enthaltenen Spektrallinien frequenzselektiv trennbar zur Verfügung stehen, und daß für jeden dieser beiden Signalanteile (s1, s2) mindestens ein digitales Filter vorhanden ist, das aus dem jeweiligen Signalanteil (s1, s2) jeweils eine Spektrallinie herausfiltert, um deren Amplitude zu ermitteln.

2. Anordnung nach Anspruch 1, dadurch gekennzeichnet, daß die digitalen Filter (F1, F2) komplexe Filter sind, welche die jeweils herausgefilterte Spektrallinie, in ein reales Signal und in ein imaginäres Signal zerlegt, abgeben, so daß aus dem realen und dem imaginären Signal durch Betragsbildung (B) die Amplitude (A1, A2, A3, A4) der Spektrallinie ermittelt werden kann.

3. Anordnung nach Anspruch 1 oder 2, dadurch gekennzeichnet, daß digitale Tiefpaßfilter (F1, F2) aus den die gewünschten Spektrallinien enthaltenden Frequenzbereichen, nachdem diese auf eine sehr niedrige Frequenz heruntergemischt worden sind, die Spektrallinien herausfiltern.

4. Anordnung nach Anspruch 1, dadurch gekennzeichnet, daß die Frequenzweiche (FW) als Kammfilter ausgebildet ist.

5. Anordnung nach Anspruch 1 oder 4, dadurch gekennzeichnet, daß die Frequenzweiche (FW) die Abtastfrequenz des ihr zugeführten digitalisierten Ausgangssignals des Ringinterferometers (IF) halbiert.

6. Anordnung nach Anspruch 1, 2, oder 3, dadurch gekennzeichnet, daß die digitalen Filter (F1, F11, F2) die Abtastfrequenz der von der Frequenzweiche (FW) abgegebenen Signalanteile weiter herabsetzen.

7. Anordnung nach Anspruch 1, 2 oder 3, dadurch gekennzeichnet, daß mehrere komplexe Filter (F1, F2) kaskadiert sind, von denen jedes die Abtastfrequenz des ihm zugeführten Signals herabsetzt.

8. Anordnung nach Anspruch 1, 2, oder 3, dadurch gekennzeichnet, daß die digitalen Filter Transversalfilter mit komplexen Koeffizienten sind, die aus den von der Frequenzweiche (FW) kommenden reellen Signalen komplexe Ausgangssignale mit verminderter Abtastfrequenz erzeugen.

9. Anordnung nach Anspruch 1, 2 oder 3, dadurch gekennzeichnet, daß für jeden von der Frequenzweiche (FW) kommenden Signalanteil (s1, s2) ein dessen Abtastfrequenz herabsetzendes Polyphasenfilter (DZF) vorhanden ist und daß hinter jedem Polyphasenfilter (DZF) soviele eine diskrete Fouriertransformation ausführende Netzwerke (DFT) parallel angeschlossen sind, wie Spektrallinien aus den Signalanteilen (s1 bzw. s2) entnommen werden sollen, wobei jedes Netzwerk (DFT) das vom Polyphasenfilter (DFT) abgegebene reelle Signal in einen Real- und Imaginärteil zerlegt.

10. Anordnung nach Anspruch 1, 2, oder 3, dadurch gekennzeichnet, daß die Abtastfrequenz des digitalisierten Ausgangssignals (i) des Ringinterferometers (IF) gleich dem p-fachen der Phasenmodulationsfrequenz oder einer davon abgeleiteten Frequenz ist, wobei p/2 eine ganze und ungerade Zahl ist.

## Claims

1. Arrangement for the detection of the amplitude of spectral lines which are contained in the phase-modulated output signal of an optical ring interferometer and which are suitable for the ascertaining of the angular speed at which the ring interferometer is rotated, for which purpose a digital evaluating circuit is used, characterised thereby that a dividing filter (FW) divides the digitised output signal (i) of the ring interferometer (IF) into a first signal component (s1) and a second signal component (s2), that the first signal component (s1) contains the spectral lines with the odd-numbered pluralities of the phase modulation frequency or a frequency derived therefrom and the second signal component (s2) contains the spectral lines with the even-numbered pluralities of the phase modulation frequency or a frequency derived therefrom, wherein the spectral lines contained in the signal components (s1, s2) are available separable by frequency selection, and that present for each of these two signal components (s1, s2) is at least one digital filter which each time filters a spectral line out of the respective signal component (s1, s2) in order to determine the amplitude thereof.

2. Arrangement according to claim 1, characterised thereby that the digital filters (F1, F2) are complex filters, which deliver the respectively filtered-out spectral line broken down into a real signal and an imaginary signal, so that the spectral line can be determined from the real and the imaginary signal by value formation (B) of the amplitude (A1, A2, A3, A4).

3. Arrangement according to claim 1 or 2, characterised thereby that digital low-pass filters (F1, F2) filter the spectral lines from the frequency ranges, which contain the desired spectral lines, after these have mixed on a very low frequency.

4. Arrangement according to claim 1, characterised thereby that the dividing filter (FW) is constructed as a comb filter.

5. Arrangement according to claim 1 or 4, characterised thereby that the dividing filter (FW) halves the scanning frequency of the digitised output signal fed thereto of the ring interferometer (IF).

6. Arrangement according to claim 1, 2 or 3, characterised thereby that the digital filters (F1, F11, F2) further reduce the scanning frequency of the signal components delivered by the dividing filter (FW).

7. Arrangement according to claim 1, 2 or 3, characterised thereby that several complex filters (F1, F2) are arranged in cascade, each of which reduces the scanning frequency of the signal fed thereto.

8. Arrangement according to claim 1, 2, or 3, characterised thereby that the digital filters are transverse filters with complex coefficients, which produce complex output signals with reduced scanning frequency from the real signals coming from the dividing filter (FW).

9. Arrangement according to claim 1, 2 or 3, characterised thereby that present for each signal component (s1, s2) coming from the dividing filter (FW) is a polyphase filter reducing the scanning frequency thereof, and that connected in parallel downstream of each polyphase filter (D2F) are as many networks (DFT), which carry out a discrete Fourier transformation, as spectral lines are to be taken from the signal components (s1 and s2), wherein each network (DFT) splits up the real signal delivered by the polyphase filter (DFT) in a real and an imaginary component.

10. Arrangement according to claim 1, 2 or 3, characterised thereby that the scanning frequency of the digitised output signal (i) of the ring interferometer (IP) is equal to the p-fold of the phase modulation frequency or a frequency derived therefrom, wherein p/2 is a whole and even number.

## Revendications

1. Agencement pour la détection de l'amplitude de raies spectrales contenues dans le signal de sortie modulé en phase d'un interféromètre annulaire, lesquelles sont appropriées, afin de déterminer la vitesse angulaire, avec laquelle l'interféromètre annulaire est pivoté, ce pourquoi un circuit d'évaluation numérique est employé, caractérisé en ce qu'un diviseur de fréquence (FW) partage le signal de sortie (i) numérisé de l'interféromètre annulaire (IF) en une première partie de signal (s1) et une deuxième partie de signal (s2), que la première partie de signal (s1) contient les raies spectrales avec les multiples impairs de la fréquence de modulation de phase ou d'une fréquence dérivée de celle-ci et la deuxième partie de signal (s2) contient les raies spectrales avec le multiple pair de la fréquence de modulation de phase ou d'une fréquence dérivée de celle-ci, où, les raies spectrales contenues dans les parties de signal (s1, s2) se trouvent à disposition séparables par sélection de fréquence, et que, pour chacune de ces deux parties de signal (s1, s2), au moins un filtre numérique est présent, qui, à partir de chaque partie de signal (s1, s2), chaque fois, extrait par filtration une raie spectrale, afin de détecter l'amplitude de celle-ci.

2. Agencement selon la revendication 1, caractérisé en ce que les filtres numériques (F1, F2) sont des filtres complexes, lesquels délivrent, la raie spectrale extraite chaque fois par filtration, décomposée en un signal réel et en un signal imaginaire, de sorte qu'à partir du signal réel et du signal imaginaire, par formation de montant (B), l'amplitude (A1, A2, A3, A4) de la raie spectrale peut être détectée.

3. Agencement selon la revendication 1 ou la revendication 2, caractérisé en ce que des filtres passe-bas numériques (F1, F2), à partir des plages de fréquence contenant les raies spectrales souhaitées, après que celles-ci aient été mélangées avec abaissement à une très faible fréquence, extraient par filtration les raies spectrales.

4. Agencement selon la revendication 1, caractérisé en ce que le diviseur de fréquence (FW) est constitué comme un filtre en peigne.

5. Agencement selon la revendication 1 ou la revendication 4, caractérisé en ce que le diviseur de fréquence (FW) partage en deux moitiés la fréquence d'exploration du signal de sortie numérisé de l'interféromètre annulaire (IF) qui lui est amené.

6. Agencement selon la revendication 1, la revendication 2 ou la revendication 3, caractérisé en ce que les filtres numériques (F1, F11, F2) abaissent de plus la fréquence d'exploration des parties de signal délivrées par le diviseur de fréquence (FW).

7. Agencement selon la revendication 1, la revendication 2 ou la revendication 3, caractérisé en ce que plusieurs filtres complexes (F1, F2) sont montés en cascade, dont chacun desquels abaisse la fréquence d'exploration du signal qui lui est amené.

8. Agencement selon la revendication 1, la revendication 2 ou la revendication 3, caractérisé en ce que les filtres numériques sont des filtres transversaux avec des coefficients complexes, qui engendrent, avec une fréquence d'exploration réduite, à partir des signaux réels venant du diviseur de fréquence (FW), des signaux de sortie complexes.

9. Agencement selon la revendication 1, la revendication 2 ou la revendication 3, caractérisé en ce que pour chaque partie de signal (s1, s2) venant du diviseur de fréquence (FW), un filtre polyphasé (DZF) abaissant la fréquence d'exploration de celle-ci est présent, et que, derrière chaque filtre polyphasé (DZF), autant de réseaux (DFT) exécutant une transformation de Fourier discrète sont raccordés en parallèle, que de raies spectrales doivent être prélevées à partir des parties de signal (s1 ou bien s2), où chaque réseau (DFT) décompose le signal réel délivré par le filtre polyphasé (DFT) en une partie réelle et une partie imaginaire.

10. Agencement selon la revendication 1, la revendication 2 ou la revendication 3, caractérisé en ce que la fréquence d'exploration du signal de sortie numérisé (i) de l'interféromètre annulaire (IF) est égale à p fois la fréquence de modulation de phase ou une fréquence dérivée de celle-ci, où, p/2 est un nombre entier et impair.

Fig. 1

Fig. 2

Fig.3

Fig. 4

Fig. 5

Fig. 6